# EUROPEAN PATENT APPLICATION

(11) **EP 0 851 129 A1**
(43) Date of publication of application: **01.07.1998**
(21) Application number: 97500222.1
(22) Date of filing: 19.12.1997
(51) Int. Cl.: F16B 13/06, F16B 37/14

(54) **Fastening device**

(30) Priority: 24.12.1996 ES 9603321 U
(71) Applicant: Celo Distribucion, S.A., 08019 Barcelona (ES)
(72) Inventor: Ceravalls Pujol, Ramon, 08019 Barcelona (ES)
(74) Representative: Ponti Sales, Adelaida

(57) **Abstract**

A fastening device includes a bolt (1) which has a head (2) and a threaded shank (3), a washer (6) and a bushing (7) inserted onto said shank (3), a sleeve (4) which covers the shank (3), a nut (5) threadable onto the shank (3), of decreasing section in the direction of the sleeve (4), with the walls of said sleeve (4) opening outwards as the nut (5) is threaded onto the shank, and a protecting cover (13) which is adapted to the outline of the head (2) so as to cover the head and the washer (6) by means of a skirt (16) and an interior flange (15). The lateral wall of the head (2) is a conical surface (10,11) which has a flat side (12) adjacent to the shank (3), and the head (2) is provided with an orifice (19) into which a tool can be fitted and in which a deformable plug (20) can be inserted under pressure.

The head (2) seats correctly on the washer (6), distributing the pressure exercised by the bolt (1) on the surface of the washer (6). The conical surface of the head (2) permits the protecting cover (13) to be secured and hinders its removal.

## Description

The present invention relates to a fastening device of the type which comprises a bolt which includes a head and a threaded shank, a washer and a plastic bushing inserted onto said shank, a sleeve which covers the shank, a nut threadable onto the shank, of decreasing section in the direction of the sleeve, with the walls of said sleeve opening outwards as the nut is threaded onto the shank, and a cover which is adapted to the outline of the head so as to cover the head and the washer. Said fasteners are usually utilized to secure various urban furniture items and assemblies such as waste-paper baskets, signboards, etc.

### BACKGROUND OF THE INVENTION

Known in the art are fastening devices of the type described above, whose head is normally of hexagonal or semi-spherical shape, with those of semi-spherical shape including an orifice into which a tool is inserted in order to tighten or loosen the bolt.

Conventionally, said bolts have the disadvantage that they can be removed by any person, since by inserting a suitable tool into the orifice of the head, in the case of a bolt with semi-spherical head, or by using a hexagonal spanner, in the case of a bolt with hexagonal head, the fastener can be removed without difficulty. Moreover, the head of the bolt is exposed to the exterior environment, and therefore to oxidation which deteriorates its mechanical characteristics and appearance.

### DESCRIPTION OF THE INVENTION

The fastening device of the invention resolves the aforesaid disadvantages, while also presenting other advantages which will be described below.

The fastening device of the invention is characterized in that the lateral wall of the head is a conical surface which has a flat side adjacent to the shank which is in contact with the washer.

Thanks to this flat side, the head of the bolt seats correctly on the washer, distributing the pressure exercised by the bolt on the surface of the washer. Moreover, the conical surface of the head permits the protecting cover to be secured and hinders its removal.

The head of the bolt presents, in addition to a lower conical surface, an upper zone which can be of conical shape, with inclination contrary to that of the lower conical surface, or, alternatively, it can be of curved shape.

When the cover is fitted by pressure on the head of the bolt the cover opens thanks to the shape of the upper zone of the head, coupling into the cavity formed between the lower conical surface of the head and the washer.

Preferably, the head of the bolt is provided with an orifice, generally of fluted shape, into which can be fitted a tool of the same outline in order to tighten the bolt into the nut and expand the walls of the sleeve. Into said orifice is inserted a lead plug which has the same outline as the orifice. This plug is inserted by pressure into the orifice, by means of a blow, and deforms when it is inside the orifice. This is an irreversible process, so that once the plug has been put in it can no longer be removed, since it expands to occupy the entire orifice, preventing insertion of a tool or any other type of device to extract or breach the fastening device.

Advantageously, the cover which covers the head and the washer has an interior flange for coupling said cover onto the head, and a lateral skirt for covering said washer. To the interior, the cover has a conical cavity which is adapted to the conical lower surface of the head. The flange provides firm securing of the cover on the head, hindering removal of the fastener by offering greater security of mechanical attachment of the item fixed by the fastening device. Furthermore, the lateral skirt protects the fastening device from oxidation due to the exterior environment thanks to the leaktightness it provides by being in contact with the piece to be secured, preventing water or other substances from getting into the head or into the fastening device in general.

The cover also has the function of aesthetically improving the external appearance of the fastening device.

Advantageously, the nut includes, projecting from its outline, some radially distributed longitudinal ribs which fit into the lower cut-outs of the sleeve. The bolt is thus prevented from rotating with the nut as the latter begins to thread around the shank of the bolt.

### BRIEF DESCRIPTION OF THE DRAWINGS

For a better understanding of all that is set out in this specification some drawings are attached which, solely by way of example, show a practical case of embodiment of the fastening device of the invention.

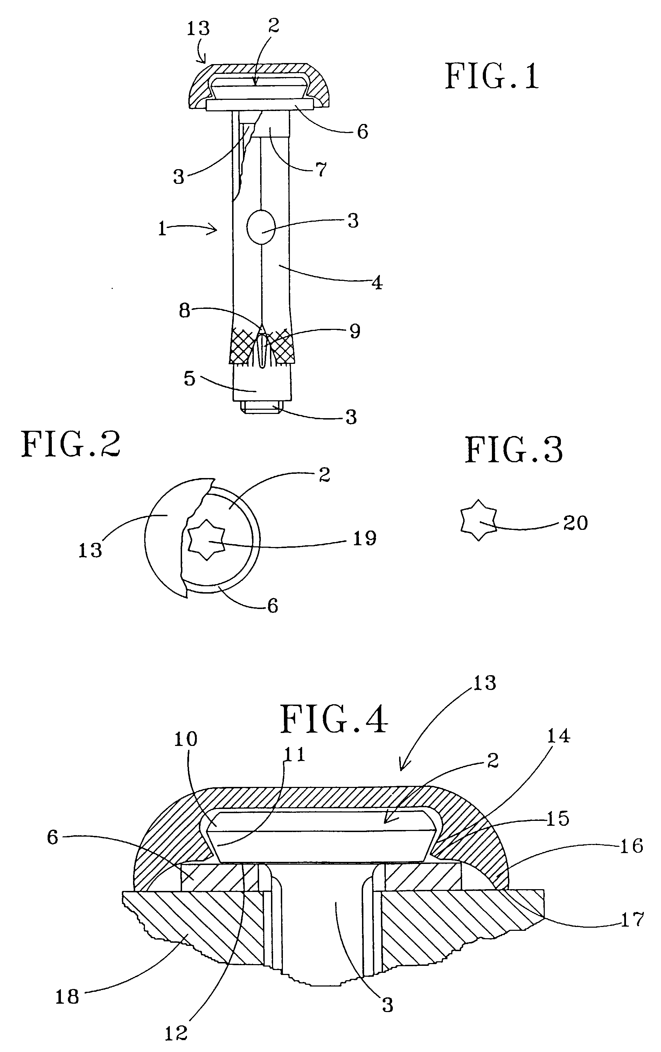

In said drawings, Figure 1 is a front elevation view of the sleeve in partial section showing the shank, with a section view of the cover which fits over the head of the bolt and the washer; Figure 2 is a plan view of the head of the bolt with partial section view of the cover which fits over it; Figure 3 is a plan view of the plug which fits into the orifice of the head of the bolt; Figure 4 is a detailed view of the head with partial section view of the cover, as shown in Figure 1.

### DESCRIPTION OF A PREFERRED EMBODIMENT

As can be observed in Figure 1, the fastening device comprises a bolt 1 which includes a head 2 and a threaded shank 3, a sleeve 4 which covers the shank 3 and a nut 5, threadable onto the shank 3, which opens the walls of said sleeve 4 as it is inserted into same.

The bolt of the fastening device further includes a washer 6 and a plastic bushing 3 fitted onto the shank 3. The sleeve is provided with some lower cut-outs 8 into which can slot a number of ribs 8 (only one of which is shown in the figure) situated on the surface of the nut 5.

As shown in Figure 4, the head 2 of the bolt 1 has a conically shaped upper zone 10 and a lower surface 11 of opposite inclination which ends in a flat side 12 which is in contact with the washer 6.

A cover 13 is fitted onto the head 2 of the bolt 1, adapting itself to its outline. The cover 13 has a conical zone 14 which is adapted to the conical lower surface 11 and ends in a flange 15 which keeps the cover 13 of the head 2 fixed. Said flange 15 facilitates the fitting of the cover 13 by pressure onto the head 2.

Finally, the cover 13 also presents a perimetral skirt 16 which covers the lateral surface of the washer 6 and whose end 17 is in contact with the piece to be secured 18. The cover 13 thus completely covers the head 2 of the bolt and the washer 6, while also providing a leaktight closure on the end 17 of the skirt 16, thereby preventing the action of atmospheric agents inside the fastening device.

As shown by Figure 2, the head 2 has an orifice 19 of fluted outline into which can be inserted a tool of the same profile in order to thread the shank 3 suitably into the nut 5 (shown in Figure 1) in the fastening operation. Into said orifice 19 can be inserted by pressure a lead plug 20 (shown in Figure 3) in order to block said orifice 19 and prevent breach of the fastening device.

Independent of the object of the invention are the materials used for manufacturing the fastening device, shapes and dimensions of same and all accessory details which might be presented, as long as they do not affect its essential nature.

## Claims

1. Fastening device, which includes a bolt (1) which has a head (2) and a threaded shank (3), a washer (6) and a bushing (7) inserted onto said shank (3), a sleeve (4) which covers the shank (3), a nut (5) threadable onto the shank (3), of decreasing section in the direction of the sleeve (4), with the walls of said sleeve (4) opening outwards as the nut (5) is threaded onto the shank, and a protecting cover (13) which is adapted to the outline of the head (2) so as to cover the head and the washer (6), characterized in that the lateral wall of the head (2) is a conical surface (10,11) which has a flat side (12) adjacent to the shank (3).

2. Fastening device, as claimed in Claim 1, characterized in that the head (2) is provided with an orifice (19) into which a tool can be fitted.

3. Fastening device, as claimed in Claim 2, characterized in that into the orifice (19) of the head (2) is inserted by pressure a deformable plug (20) which has the same outline as the orifice (19).

4. Fastening device, as claimed in Claim 1, characterized in that the cover (13) which covers the head (2) and the washer (6) has a lateral skirt (16) for covering said washer (6) and an interior flange (15) for fitting said cover (13) onto the head (2) of the bolt (1).

5. Fastening device, as claimed in Claim 1, on which the end of the sleeve (4) adjacent to the nut (5) is partially cut out, characterized in that the nut (5) includes, projecting from its outline, some radially distributed longitudinal ribs (9) which fit into the cavities defined by the cut-out ends.
